# EUROPÄISCHE PATENTSCHRIFT

(11) **EP 1 894 668 B1**
(45) Veröffentlichungstag und Bekanntmachung des Hinweises auf die Patenterteilung: **12.08.2009**
(21) Anmeldenummer: 07114335.8
(22) Anmeldetag: 14.08.2007
(51) Int. Cl.: B23P 21/00, B23Q 37/00

(54) **Bearbeitungsmodul**
Machining module
Module de traitement

(30) Priorität: 02.09.2006 DE 202006013570 U
(43) Veröffentlichungstag der Anmeldung: 05.03.2008
(73) Patentinhaber: ZBV-Automation Berse + Elsas GmbH, 53842 Troisdorf (DE)
(72) Erfinder: Berse, Michael, Dipl.-Ing., 53773 Hennef (DE); Schöneberg, Wolfgang, 53639 Königswinter (DE)
(74) Vertreter: von Kreisler Selting Werner

(56) Entgegenhaltungen:
- EP-A- 1 452 265
- WO-A-97/27024
- WO-A-20/04087369
- DE-U1-0202004 020 19

## Beschreibung

Die Erfindung betrifft ein Bearbeitungsmodul zum Bearbeiten von Werkstücken.

Ein Bearbeitungsmodul nach dem Oberbegriff des Anspruchs 1 ist aus DE 20 2004 020190 U1 bekannt.

Bekannt sind Bearbeitungsmodule, die zu Fertigungslinien zusammengesetzt werden können, wobei Förderer die Werkstücke von einem Modul zum nächsten transportieren. Auf diese Weise können vollautomatische Bearbeitungslinien zusammengestellt werden. Die Bearbeitungsmodule enthalten eine Stromversorgung und elektrische bzw. pneumatische oder hydraulische Steuereinrichtungen zum Betätigen und Steuern der Bearbeitungseinheit. Es gibt Fälle unterschiedlicher Automatisierungsgrade. Im einfachsten Fall erfolgt eine manuelle Bearbeitung an mehreren Arbeitsplätzen, an denen sich individuelle Bearbeitungseinheiten befinden. Der Transport der Werkstücke sowie das Bearbeiten erfolgen hierbei manuell. Derartige Bearbeitungslinien werden als Steh-Geh-Linien bezeichnet, weil der Bearbeiter von einer Station zur nächsten geht und zum Zwecke einer Bearbeitung stehen bleibt. Die Bearbeitungsmodule, die für die unterschiedlichen Automatisierungsgrade eingesetzt werden, sind derzeit unterschiedlich. Bei manueller Bearbeitung werden praktisch nur Gestelle benutzt, die eine Tragvorrichtung für eine Bearbeitungseinheit aufweisen. Bei automatisierten Förderlinien werden dagegen Bearbeitungsmodule eingesetzt, die Vorkehrungen für die Befestigung eines Förderers haben und außerdem eigene Energieversorgungs- und Steuereinheiten für die Bearbeitungseinheit enthalten.

Der Begriff "Bearbeitung" ist generell breit zu verstehen. Er umfasst unter anderem die mechanische Bearbeitung oder Montage von Werkstücken, ebenso wie das Messen oder die Inspektion.

Der Erfindung liegt die Aufgabe zugrunde, ein Bearbeitungsmodul zu schaffen, das für unterschiedliche Ausbaustufen von einem manuellen Handarbeitsplatz über eine halbautomatische Bearbeitungsanlage bis hin zu einer vollautomatischen Bearbeitungsanlage einsetzbar ist und unterschiedliche Ausbaustufen und Variationen ermöglicht.

Das Bearbeitungsmodul nach der vorliegenden Erfindung ist durch den Anspruch 1 definiert. Es weist ein Gestell mit quaderförmiger Basis, an der Rückseite aufragenden Säulen und einem nach vorne ragenden Dachbalken auf. Dieses Gestell hat somit generell eine C-Form. Auf der quaderförmigen Basis befindet sich die Prozesstischplatte, auf der die Tragvorrichtung montiert ist. Die Tragvorrichtung weist zwei horizontal beabstandete, aufrechtstehende Bügel auf. Die Bügel tragen die Bearbeitungseinheit, die somit im Abstand über der Prozesstischplatte gehalten wird. Die Bügel ermöglichen ferner das Integrieren des Bearbeitungsmoduls in Fördereinrichtungen, wobei die Fördereinrichtung durch das Bearbeitungsmodul hindurchgehen kann, und zwar sowohl in frontaler Richtung als auch in Querrichtung.

Das Bearbeitungsmodul ist geeignet, in seiner einfachsten Ausbaustufe für einen Handarbeitsplatz eingesetzt zu werden. Unter einem Handarbeitsplatz ist ein Arbeitsplatz zu verstehen, an dem eine manuelle Bearbeitung stattfindet, wobei auch maschinenbetriebene Werkzeuge eingesetzt werden können. Das Bearbeitungsmodul ist auch geeignet, entsprechende Schutzvorrichtungen vorzusehen, die den Bearbeitungsbereich umgeben, so dass nicht unbeabsichtigt in diesen eingegriffen werden kann. Der Dachbalken kann eine Bedienerschnittstelle aufnehmen und eine Eingabevorrichtung bzw. Schalter oder andere Stelleinrichtungen enthalten sowie auch eine Anzeigevorrichtung. Hier kann sich beispielsweise auch der Netzschalter befinden. Auch diejenigen Komponenten, die im oder am Dachbalken befestigt sind, lassen sich der jeweiligen Ausbaustufe anpassen.

An den oberen Enden der Säulen kann eine in Seitenansicht winkelförmige Haube schwenkbar befestigt sein, die eine Frontscheibe aufweist. Auf diese Weise kann die Frontseite des Arbeitsbereichs mit der Scheibe verschlossen werden. Die Scheibe kann eine Öffnung für den Durchgriff oder auch für das Hindurchführen eines Förderers enthalten.

Neben der Möglichkeit unterschiedlicher Ausbaustufen bietet die Erfindung den Vorteil, dass die untereinander gleichartigen Bearbeitungsmodule in verschiedenartigen Kombinationen zusammengesetzt werden können. So können sie beispielsweise seitlich nebeneinander gestellt werden, wobei alle Frontseiten in dieselbe Richtung weisen. Eine andere Möglichkeit besteht darin, die Module Rücken an Rücken anzuordnen, wobei die Frontseiten in entgegengesetzte Richtungen weisen. Schließlich können auch Bearbeitungslinien realisiert werden, in denen Module mit automatischer Bearbeitung und Module mit manueller Bearbeitung miteinander kombiniert sind, wobei solche Bearbeitungslinien mit unterschiedlichen Verläufen realisiert werden können. Die umfangreichen Variationsmöglichkeiten erlauben vielseitige Einsätze des Bearbeitungsmoduls.

Im Folgenden werden unter Bezugnahme auf die Zeichnungen Ausführungsbeispiele der Erfindung näher erläutert.

Es zeigen:
- Fig. 1: ein Bearbeitungsmodul in der Grundversion, die die einfachste Bearbeitungsstufe darstellt,
- Fig. 2: das Bearbeitungsmodul mit zusätzlicher Haube,
- Fig. 3: die Vorrichtung nach Figur 2 mit hochgeklappter Haube,
- Fig. 4: ein Bearbeitungsmodul mit einer Öffnung in der Frontscheibe,
- Fig. 4a: die Vorrichtung nach Figur 4 mit geöffneter Haube,
- Fig. 5: ein Bearbeitungsmodul mit querverlaufendem Förderer,
- Fig. 5a: die Vorrichtung nach Figur 5 mit geöffneter Haube,
- Fig. 6: ein Bearbeitungsmodul mit Haube und in Längsrichtung verlaufendem Förderer,
- Fig. 6a: die Vorrichtung nach Figur 6 mit geöffneter Haube,
- Fig. 7: verschiedene Arten der Materialzuführungen bei dem Bearbeitungsmodul,
- Fig. 8: unterschiedliche Aufstellvarianten von Bearbeitungsmodulen und
- Fig. 9: unterschiedliche Anordnungen der C-förmigen Bügel auf der Basis des Gestells.

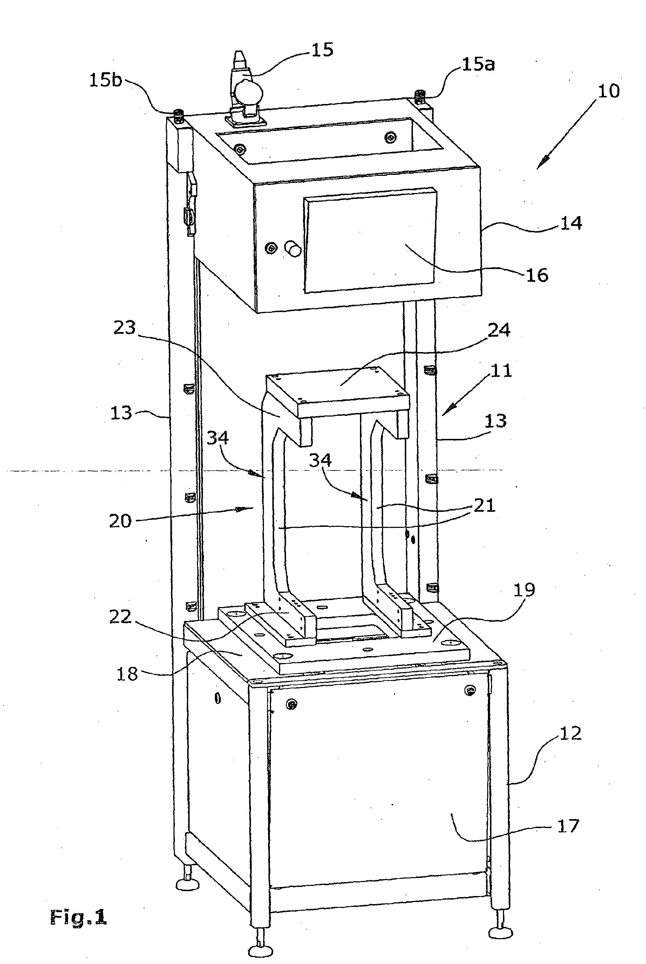

Figur 1 zeigt die Grundform des Bearbeitungsmoduls 10. Dieses weist ein Gestell 11 aus Stahlprofilen auf. Das Gestell 11 hat eine quaderförmige Basis 12, die eine Art Sockel oder Tisch bildet und mit Füßen auf dem Boden steht. Die hinteren vertikalen Streben der Basis 12 sind nach oben verlängert und bilden aufragende Säulen 13. An den oberen Enden sind die voneinander beabstandeten Säulen durch einen Dachbalken 14 verbunden, der auslegerartig nach vorne vorsteht. An dem Dachbalken befindet sich auf der Oberseite eine Anschlusseinrichtung 15 für die Zufuhr von Strom oder anderer Energie sowie für Steuerleitungen. Auf den oberen Enden der Säulen 13 sind weitere Anschlussvorrichtungen 15a,15b vorgesehen. Die Anschlussvnrrichtung 15a dient zum Anschließen der Pneumatikversorgung und die Anschlussvorrichtung 15b zum Anschließen einer Datenkommunikationsleitung. An der Frontseite des Dachbalkens 14 befindet sich eine Bedien- und Anzeigevorrichtung 16. Hierbei kann es sich um einen Touchscreen handeln oder um eine andere Art von Eingabevorrichtung.

Die Basis 12 weist zwischen den Streben des Gestells Wände auf. Sie kann beispielsweise einen Schubladenauszug oder eine Klappe 17 enthalten, die Zugang zum Inneren der Basis bildet, so dass dort Gegenstände aufbewahrt werden können. Der Dachbalken 14 steht, in Draufsicht gesehen, nicht über die Kontur der Basis 12 vor. Im vorliegenden Fall sind beide im wesentlichen deckungsgleich.

Die Basis 12 ist mit einer Oberwand 18 bedeckt. Auf der Oberwand ist eine Prozesstischplatte 19 montiert, auf welcher die Tragvorrichtung 20 befestigt ist. Die Tragvorrichtung weist zwei vertikale C-förmige Bügel 34 auf, die seitlich nebeneinander mit gegenseitigem Abstand angeordnet sind. Jeder Bügel 34 hat einen horizontalen unteren Schenkel 22, einen vertikalen Ständer 21 und einen horizontalen oberen Schenkel 23. Auf den oberen Schenkeln ist eine Tragplatte 24 befestigt, die als Träger für eine Bearbeitungseinheit dienen kann.

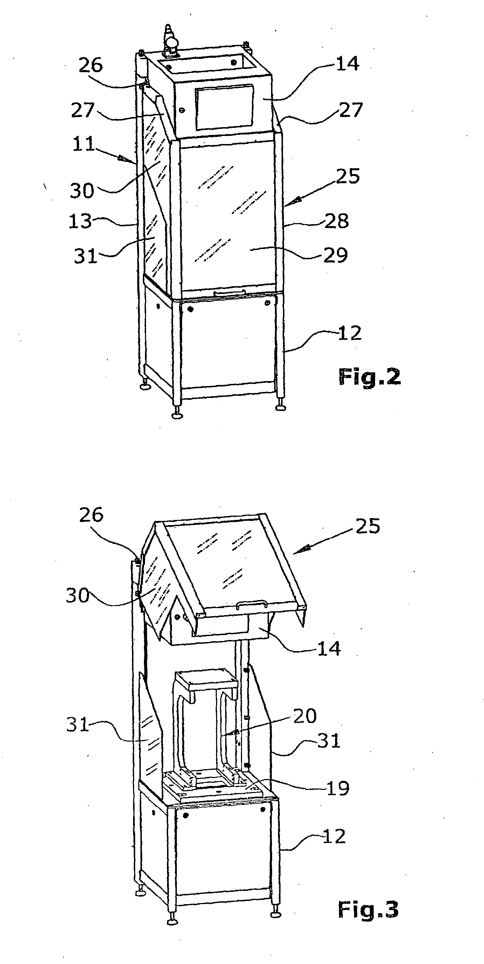

Während in Figur 1 eine Schutzverkleidung nicht vorgesehen ist, ist eine solche Schutzverkleidung bei den Figuren 2 und 3 vorhanden in Form einer in Seitenansicht winkelförmigen Haube 25, welche durch seitliche Gelenke 26 an den oberen Enden der Säulen 13 befestigt ist. Die Haube 25 weist zwei parallele Streben 27 auf, die den Dachbalken 14 gabelförmig umgeben, und einen Frontrahmen 28 mit einer Frontscheibe 29. Die Haube 25 hat Seitenscheiben 30. Weitere Seitenscheiben 31 sind auf der Basis 12 vorgesehen, so dass die Seitenscheiben 30 und 31 die Seiten des Gestells im wesentlichen verschließen.

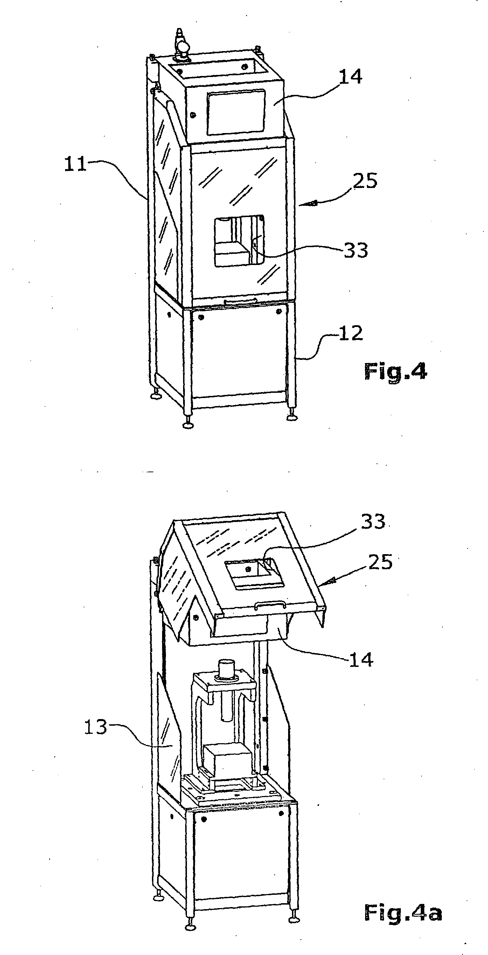

Figur 4 zeigt ein ähnliches Bearbeitungsmodul wie Figur 2, mit dem Unterschied, dass in der Frontscheibe 29 eine Öffnung 33 vorhanden ist, die einen manuellen Zugriff auf die zu bearbeitenden Werkstücke ermöglicht. In Figur 4a ist das Bearbeitungsmodul von Figur 4 mit geöffneter Haube 25 dargestellt.

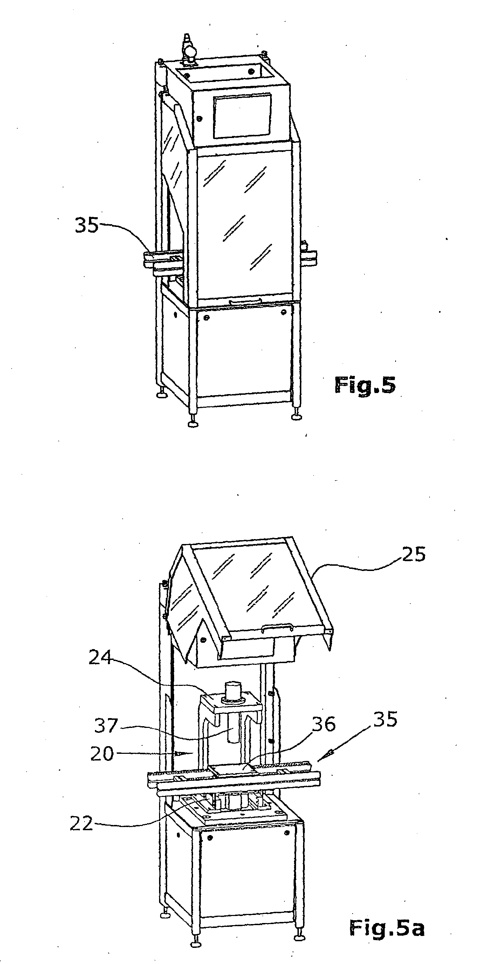

Figuren 5 und 5a zeigen eine Version, bei der auf den horizontalen Schenkeln der Tragvorrichtung 20 ein Förderer 35 montiert ist, der die Werkstücke auf Werkstückträgern 36 von einem Bearbeitungsmodul zum nächsten transportiert. Auf den Werkstückträgern 36 werden die Werkstücke auch bearbeitet. Die Bearbeitungseinheit 37 ist an der Tragplatte 24 befestigt, die ihrerseits an der Tragvorrichtung 20 angebracht ist.

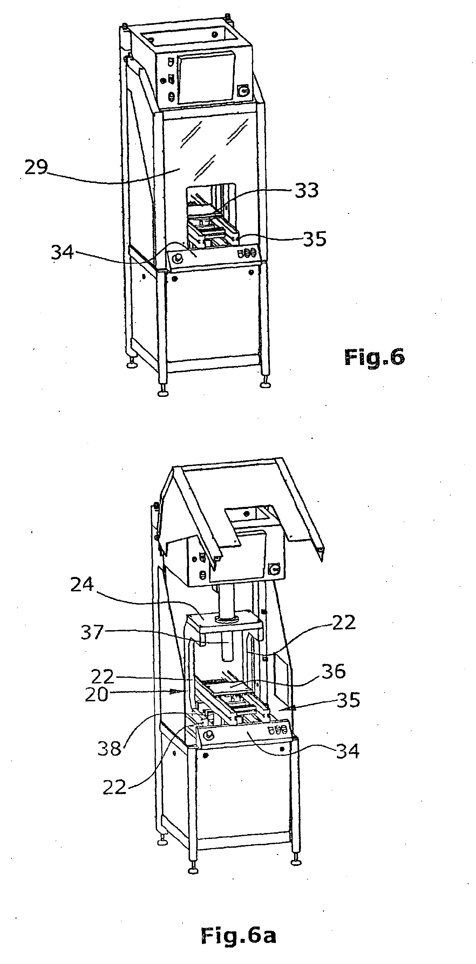

Figuren 6 und 6a zeigen eine Variante, bei der der Förderer 35 in Vorwärts-Rückwärts-Richtung durch das Bearbeitungsmodul hindurchgeht. Der Förderer 35 verläuft zwischen den Ständern 21 der Tragvorrichtung 20 und wird auch hier unter der Bearbeitungseinheit 37 entlanggeführt und angehalten. In den beiden in Figuren 5a und 6a dargestellten Fällen liegt der Förderer entweder direkt auf den unteren Schenkeln 22 der C-förmigen Bügel oder er liegt auf einem Querbalken 38 (Figur 6a), der die Schenkel 22 verbindet. In beiden Fällen befinden sich die Förderer 35 also auf gleicher Höhe.

In Figur 6 geht der Förderer 35 durch die Öffnung 33 der Frontscheibe 29 hindurch. Auf der Basis 12 befindet sich an der Frontseite eine Konsole 34 mit Bedien- oder Anzeigeelementen. Diese Konsole 34 ist auch bei geschlossener Frontscheibe 29 zugänglich. Sie liegt in einem Ausschnitt der Frontscheibe, der sich an die Öffnung 33 anschließt.

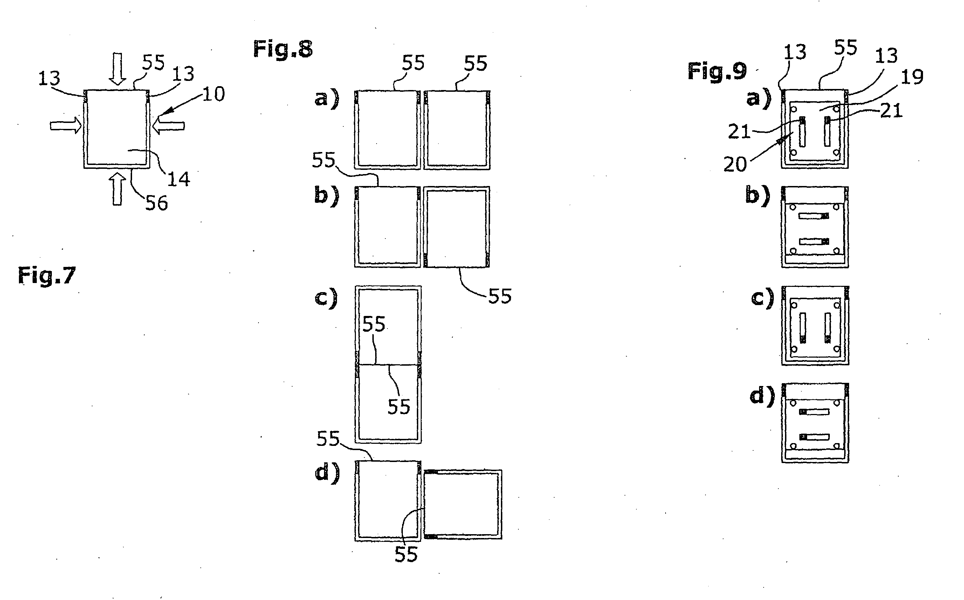

In den Figuren 7 - 9 sind jeweils Draufsichten der Module 10 dargestellt. Dabei sind die Säulen 13 und der Dachbalken 14 erkennbar. Die Säulen 13 definieren die Rückseite 55 während die gegenüberliegende Seite die Frontseite 56 ist. Figur 7 zeigt, dass der Materialfluss in und aus dem Modul in vier Richtungen erfolgen kann, nämlich von hinten, von vorne und von jeder der beiden Seiten.

Figur 8a zeigt zwei Module, die Seite an Seite mit gleichgerichteten Rückseiten 55 angeordnet sind. Figur 8b zeigt zwei Module, die ebenfalls Seite an Seite, jedoch mit entgegengesetzten Rückseiten 55 angeordnet sind. Figur 8c zeigt zwei Module, die rücklings zueinander angeordnet sind, nämlich Rücken an Rücken. Figur 8d zeigt zwei Module, die um 90° zueinander gedreht sind, wobei die Rückseite 55 des einen Moduls gegen die Seitenwand des anderen Moduls gerichtet ist.

Figur 9 zeigt die unterschiedlichen Möglichkeiten der Anordnung der Prozesstischplatte 19 auf der Basis 12. Dabei sind die Ständer 21 der Tragvorrichtung 20 erkennbar. Die Tragvorrichtung 20 kann durch Umsetzen der Prozesstischplatte 19 in vier verschiedenen Ausrichtungen angeordnet werden, die in den Figuren 9a - 9d im einzelnen dargestellt sind, wobei die Öffnung der C-Form in Figur 9a nach vorne zeigt, in Figur 9b nach links zeigt, in Figur 9c nach hinten zeigt und in Figur 9d nach rechts zeigt.

## Patentansprüche

1. Bearbeitungsmodul mit einem in Seitenansicht C-förmigen Gestell (11), das eine quaderförmige Basis (12) bildet, die eine Prozesstischplatte (19) trägt, wobei das Gestell (12) eine Rückseite (55) mit aufragenden Säulen (13) und einem von den Säulen getragenen, frei auskragend nach vorne ragenden Dachbalken (14) aufweist, und **gekennzeichnet durch** mindestens eine Tragvorrichtung (20) aus zwei seitlich beabstandeten Bügeln (34), die jeweils auf der Prozesstischplatte (19) montiert sind und einen vertikalen Ständer (21) und einen frei davon abstehenden oberen horizontalen Schenkel (23) aufweisen, wobei die Tragvorrichtung (20) geeignet ist, auf den oberen Schenkeln (23) eine Bearbeitungseinheit und auf der Prozesstischplatte einen Förderer (35) zu tragen.

2. Bearbeitungsmodul nach Anspruch 1, **dadurch gekennzeichnet, dass** der Dachbalken (14) eine Bedien- und Anzeigevorrichtung (16) enthält.

3. Bearbeitungsmodul nach Anspruch 1 oder 2, **dadurch gekennzeichnet, dass** an den oberen Enden der Säulen (13) eine in Seitenansicht winkelförmige Haube (25) schwenkbar befestigt ist, die eine Frontscheibe (29) aufweist.

4. Bearbeitungsmodul nach Anspruch 3, **dadurch gekennzeichnet, dass** die Haube (25) im heruntergeschwenkten Zustand bis auf die Basis (12) des Gestells (11) reicht.

5. Bearbeitungsmodul nach Anspruch 3 oder 4, **dadurch gekennzeichnet, dass** die Frontscheibe (29) eine Öffnung (33) aufweist.

6. Bearbeitungsmodul nach einem der Ansprüche 1 - 5, **dadurch gekennzeichnet, dass** auf den oberen horizontalen Schenkeln (23) der Bügel (34) eine Tragplatte (24) für die Bearbeitungseinheit (37) montiert ist.

7. Bearbeitungsmodul nach einem der Ansprüche 1 - 6, **dadurch gekennzeichnet, dass** ein Förderer (35) quer auf den unteren Schenkeln (22) der C-förmigen Bügel (34) aufliegt.

8. Bearbeitungsmodul nach einem der Ansprüche 1 - 7, **dadurch gekennzeichnet, dass** ein Förderer (35) in Draufsicht zwischen den unteren Schenkeln (22) der C-förmigen Bügel (34) verläuft und zwischen den Ständern (21) der Tragvorrichtung hindurchgeht.

9. Bearbeitungsmodul nach einem der Ansprüche 1 - 8, **dadurch gekennzeichnet, dass** das Gestell (11) Seitenscheiben (30) aufweist.

10. Bearbeitungsmodul nach Anspruch 3, **dadurch gekennzeichnet, dass** die Haube (25) Seitenscheiben (30) aufweist.

11. Bearbeitungsmodul nach einem der Ansprüche 1 - 10, **dadurch gekennzeichnet, dass** die Bügel (34) C-förmig sind und außer dem Ständer (21) und dem oberen Schenkel (23) jeweils einen unteren horizontalen Schenkel (22) aufweisen, der auf der Prozesstischplatte (19) befestigt ist.

## Claims

1. Machining module comprising a frame (11) which in side view is C-shaped, and forms a cuboid-shaped base (12) supporting a process table top (19), the frame (11) having a rear side (55) with upright pillars (13), and a roof beam (14) supported by the pillars and freely cantilevering frontward, and **characterized by** at least one supporting device (20) of two laterally spaced apart brackets (34), each mounted on the process table top (19) and comprising a vertical post (21) and an upper horizontal leg (23) projecting freely therefrom, the supporting device (20) being adapted to support a machining unit on the upper legs (23) and a conveyor (35) on the process table top.

2. Machining module of claim 1, **characterized in that** the roof beam (14) includes an operating and display device (16).

3. Machining module of claim 1 or 2, **characterized in that** a hood (25) is pivotally fastened to the upper ends of the pillars (13), said hood being of angular shape, when seen from the side, and comprising a front pane (29).

4. Machining module of claim 3, **characterized in that,** when pivoted down, the hood (25) extends down to the base (12) of the frame (11).

5. Machining module of claim 3 or 4, **characterized in that** the front pane (29) has an opening (33).

6. Machining module of one of claims 1-5, **characterized in that** a support plate (24) for the machining unit (37) is mounted on the upper horizontal legs (23) of the brackets (34).

7. Machining module of one of claims 1-6, **characterized in that** a conveyor (35) rests transversely on the lower legs (22) of the C-shaped brackets (34).

8. Machining module of one of claims 1-7, **characterized in that,** seen in top plan view, a conveyor (35) extends between the lower legs (22) of the C-shaped brackets (34) and passes between the posts (21) of the support device.

9. Machining module of one of claims 1-8, **characterized in that** the frame (11) has side panes (30).

10. Machining module of claim 3, **characterized in that** the hood (25) has side panes (30).

11. Machining module of one of claims 1-10, **characterized in that** the brackets (34) are C-shaped and each comprise, besides the post (21) and the top leg (23), a lower horizontal leg (22) fastened on the process table top (19).

## Revendications

1. Module de traîtement avec un cadre (11) en forme de C, vu de la coté, formant une base (12) parallelépipédique supportant un plateau de table de processus (19), le cadre (11) ayant un arrière (55) avec des colonnes droites (13) et un entraît (14) porté par les colonnes, en porte à faux libre vers l'avant, et **caractérisé par** au moins un dispositif de support (20) formé par deux étriers (34) écartés latéralement l'un de l'autre, chaque étrier étant monté sur ledit plateau de table de processus (19) et présentant un montant (21) vertical et une branche (23) supérieure horizontale en saillie libre dudit montant, le dispositif de support (20) étant apte à supporter un ensemble de traîtement sur les branches (23) supérieures et un transporteur (35) sur ledit plateau de table de processus.

2. Module de traîtement selon la revendication 1, **caractérisé en ce que** l'entraît (14) comprend un dispositif d'opération et d'affichage (16).

3. Module de traîtement selon la revendication 1 ou 2, **caractérisé en ce qu'**un capot (25) de forme angulaire, vu de la coté, est monté de manière pivotable aux extrémités supérieures des colonnes (13), le capot comprenant une vitre frontale (29).

4. Module de traîtement selon la revendication 3, **caractérisé en ce qu'**en état pivoté vers le bas, ledit capot (25) s'étend jusqu'à la base (12) du cadre (11).

5. Module de traîtement selon la revendication 3 ou 4, **caractérisé en ce que** la vitre frontale (29) comprend une ouverture (33).

6. Module de traîtement selon l'une des revendications 1-5, **caractérisé en ce qu'**un plateau de support (24) pour l'ensemble de traîtement (37) est monté sur les branches (23) horizontales supérieures des étriers (34).

7. Module de traîtement selon l'une des revendications 1-6, **caractérisé en ce qu'**un transporteur (35) reste transversalement sur les branches inférieures (22) des étriers (34) en forme de C.

8. Module de traîtement selon l'une des revendications 1-7, **caractérisé en ce qu'**en vue de dessus, un transporteur (35) s'étend entre les branches inférieures (22) des étriers (34) en forme de C, et passe entre les montants (21) du dispositif de support.

9. Module de traîtement selon l'une des revendications 1-8, **caractérisé en ce que** ledit cadre (11) comprend des vitres latérales (30).

10. Module de traîtement selon la revendication 3, **caractérisé en ce que** ledit capot (25) comprend des vitres latérales (30).

11. Module de traîtement selon l'une des revendications 1-10, **caractérisé en ce que** les étriers (34) sont en forme de C et respectivement comprennent, outre le montant (21) et la branche supérieure (23), une branche horizontale inférieure (22) montées sur le plateau de table de processus (19).
